# EUROPÄISCHE PATENTSCHRIFT

(11) **EP 4 281 262 B1**
(45) Veröffentlichungstag und Bekanntmachung des Hinweises auf die Patenterteilung: **17.12.2025**
(21) Anmeldenummer: 22706803.8
(22) Anmeldetag: 17.02.2022
(51) Int. Cl.: B26D 5/00, B26D 7/30, B26D 7/32, B65G 47/52, B65G 54/02

(54) **NAHRUNGSMITTELVERARBEITUNGSEINRICHTUNG UND ZUGEHÖRIGES BETRIEBSVERFAHREN**
FOOD-PROCESSING DEVICE AND ASSOCIATED OPERATING METHOD
DISPOSITIF DE TRAITEMENT D'ALIMENTS ET PROCÉDÉ DE FONCTIONNEMENT ASSOCIÉ

(30) Priorität: 03.03.2021 DE 102021105093
(43) Veröffentlichungstag der Anmeldung: 29.11.2023
(73) Patentinhaber: Provisur Technologies, Inc., Chicago, IL 60601 (US)
(72) Erfinder: GUGGEMOS, Klaus, 87549 Rettenberg (DE); GOROLL, Paul, 87448 Waltenhofen (DE); HINDORFF, Matthias, 87448 Waltenhofen (DE); MAY, Alexander, 87448 Waltenhofen (DE); MOHR, Florian, 87477 Sulzberg (DE); SCHROFF, Klaus Dieter, 78465 Konstanz (DE); BIALY, Jürgen, 25548 Oeschebüttel (DE)
(74) Vertreter: v. Bezold & Partner Patentanwälte - PartG mbB
(86) Internationale Anmeldenummer: PCT/EP2022/053976
(87) Internationale Veröffentlichungsnummer: WO 2022/184463

(56) Entgegenhaltungen:
- WO-A1-2015/162182
- WO-A1-2016/012171
- WO-A1-2016/071062
- DE-A1- 102010 019 248
- DE-A1- 102014 116 232
- N N: "Flying Motion XPlanar", 1 November 2018 (2018-11-01), pages 1 - 28, XP055668904, Retrieved from the Internet <URL:https://download.beckhoff.com/download/Document/catalog/Beckhoff_XPlanar_d.pdf> [retrieved on 20200214]

## Beschreibung

Die Erfindung betrifft eine Nahrungsmittelverarbeitungseinrichtung zum Aufschneiden von Nahrungsmittelartikeln (z.B. Fleischstücke, Salamistangen, Käsestücke) in Scheiben. Weiterhin betrifft die Erfindung ein zugehöriges Betriebsverfahren für eine solche Nahrungsmittelverarbeitungseinrichtung.

Aus dem Stand der Technik sind Nahrungsmittelverarbeitungseinrichtungen bekannt, die Nahrungsmittelartikel (z.B. Fleischstücke, Salamistangen, Käsestücke) mittels einer Schneideinrichtung ("Slicer") automatisiert in Scheiben aufschneiden, wobei die Scheiben dann auf einen Förderer fallen, auf dem Scheibenstapel gebildet werden, die dann abtransportiert werden. Bei den bekannten Nahrungsmittelverarbeitungseinrichtungen ist dieser Förderer als Förderband ausgebildet. Derartige Förderbänder sind jedoch relativ aufwendig und unflexibel.

Zum technischen Hintergrund der Erfindung ist auch hinzuweisen auf DE 10 2014 116 232 A1, die Produktbroschüre "Flying Motion: XPlanar" der Fa. Beckhoff Automation GmbH & Co. KG, WO 2015/162182 A1, DE 10 2010 019 248 A1 und WO 2016/012171 A1.

Schließlich offenbart WO 2016/071062 A1 eine Nahrungsmittelverarbeitungseinrichtung gemäß dem Oberbegriff von Anspruch 1. Diese bekannte Nahrungsmittelverarbeitungseinrichtung ermöglicht jedoch nicht das Wiegen der Portionen aus den abgeschnittenen scheiben

Der Erfindung liegt deshalb die Aufgabe zugrunde, eine entsprechend verbesserte Nahrungsmittelverarbeitungseinrichtung zu schaffen. Weiterhin liegt der Erfindung die Aufgabe zugrunde, ein entsprechendes Betriebsverfahren für eine solche Nahrungsmittelverarbeitungseinrichtung anzugeben.

Diese Aufgabe wird durch eine Nahrungsmittelverarbeitungseinrichtung gemäß dem Hauptanspruch bzw. durch ein entsprechendes Betriebsverfahren gemäß dem Nebenanspruch gelöst.

Die erfindungsgemäße Nahrungsmittelverarbeitungseinrichtung weist zunächst in Übereinstimmung mit dem Stand der Technik eine Schneideinrichtung auf, um Scheiben oder zumindest eine einzelne Scheibe von den Nahrungsmittelartikeln (z.B. Fleischstücke, Salamistangen, Käsestücke) abzuschneiden. Derartige Schneideinrichtungen sind an sich aus dem Stand der Technik bekannt und müssen deshalb nicht näher beschrieben werden. An dieser Stelle ist lediglich zu erwähnen, dass die Schneideinrichtung ein Schneidmesser aufweist, das beispielsweise als Sichelmesser ausgebildet sein kann und um eine feste Drehachse rotiert. Es besteht jedoch alternativ auch die Möglichkeit, dass das Schneidmesser eine Orbitalbewegung ausgeführt, so dass das Schneidmesser um die Drehachse rotiert, während die Drehachse selbst eine Orbitalbewegung ausführt. Weiterhin ist zu erwähnen, dass die Schneideinrichtung üblicherweise eine Vorschubeinrichtung aufweist, die die Nahrungsmittelartikel (z.B. Fleischstücke, Salamistangen, Käsestücke) in einer Vorschubrichtung in die Schneidebene bewegt, in der die Nahrungsmittelartikel dann aufgeschnitten werden. Die Erfindung ist hinsichtlich der konstruktiven Gestaltung dieser Vorschubeinrichtung nicht auf bestimmte Bauarten beschränkt. Beispielsweise kann die Vorschubeinrichtung Förderbänder aufweisen, die die einzelnen Nahrungsmittelartikel oben und/oder unten erfassen und in die Schneidebene fördern. Alternativ oder zusätzlich kann ein Greifer vorgesehen sein, der das hintere Ende der Nahrungsmittelartikel greift, wobei der Greifer die Nahrungsmittelartikel so in die Schneidebene bewegt.

Darüber hinaus weist auch die erfindungsgemäße Nahrungsmittelverarbeitungseinrichtung in Übereinstimmung mit dem Stand der Technik einen Förderer auf, der die abgeschnittenen Scheiben nach einem Schneidvorgang aufnimmt, wobei der Förderer vorzugsweise in der Falllinie der Scheiben angeordnet ist, so dass die abgeschnittenen Scheiben von der Schneideinrichtung automatisch auf den Förderer fallen.

Die Erfindung zeichnet sich nun dadurch aus, dass der Förderer nicht als Förderband ausgebildet ist, sondern als Unstetigförderer, der die abgelegten Scheiben im Gegensatz zu einem Förderband unstetig fördert. Der im Rahmen der Erfindung verwendete Begriff eines Unstetigförderers bedeutet entsprechend der üblichen Fachterminologie, dass der Unstetigförderer das Fördergut (z.B. Scheibenstapel) nicht kontinuierlich fördern kann, sondern nur unstetig. Hierbei ist jedoch zu bemerken, dass die Produktablage auf dem Unstetigförderer innerhalb einer Portion kontinuierlich erfolgen kann.

Gemäß der Erfindung weist der Unstetigförderer mindestens einen Fördergutträger auf, der innerhalb einer Förderfläche in zwei Dimensionen ohne Bindung an einen festen Förderweg frei verfahrbar ist und die abgeschnittenen Scheiben aufnimmt. Derartige Fördergutträger sind an sich bereits aus dem Stand der Technik bekannt und beispielsweise in der Patentanmeldung DE 10 2020 105 678.8 beschrieben, so dass der Inhalt dieser früheren Patentanmeldung der vorliegenden Beschreibung hinsichtlich des konstruktiven Aufbaus des Fördergutträgers in vollem Umfang zuzurechnen ist. Darüber hinaus sind derartige Fördergutträger auch von der deutschen Firma Beckhoff Automation GmbH & Co. KG unter der Produktbezeichnung "XPlanar" erhältlich.

Ferner weist der Unstetigförderer gemäß der Erfindung ein berührungsloses Antriebssystem auf, das den Fördergutträger innerhalb der Förderfläche entlang einem frei programmierbaren Förderweg bewegt und zwar ohne einen Berührungskontakt zwischen dem Fördergutträger einerseits und der Förderfläche andererseits. Derartige berührungslose Antriebssysteme arbeiten beispielsweise mit der an sich bekannten Magnetschwebetechnik, jedoch sind im Rahmen der Erfindung grundsätzlich auch andere Antriebstechniken möglich. Beispielsweise sind derartige berührungslose Antriebssysteme von der deutschen Firma Beckhoff Automation GmbH & Co. KG unter der Produktbezeichnung "XPlanar" erhältlich.

Vorzugsweise verläuft die Förderfläche des berührungslosen Antriebssystems im Wesentlichen waagerecht, wobei geringfügige Winkelabweichungen zur Waagerechten von weniger als ±10°, ±5° oder ±2° möglich sind.

In dem bevorzugten Ausführungsbeispiel besteht das berührungslose Antriebssystem aus mehreren Modulen, die vorzugsweise lückenlos aneinander angrenzen und die durchgehende Förderfläche bilden, wobei der Förderweg innerhalb der Förderfläche frei programmiert ist. Die einzelnen Module können hierbei rechteckig sein, damit die Förderfläche lückenlos aus den Modulen zusammengesetzt werden kann. Eine solche technische Realisierung des berührungslosen Antriebssystems entspricht auch dem vorstehend bereits kurz erwähnten Antriebssystem "XPlanar".

Weiterhin besteht im Rahmen der Erfindung die Möglichkeit, dass die Nahrungsmittelverarbeitungseinrichtung eine Hebeeinrichtung aufweist, um den Fördergutträger anzuheben oder abzusenken, insbesondere in senkrechter Richtung. Die Hebeeinrichtung kann beispielsweise einen Hub des Fördergutträgers von mindestens 2 mm, 3 mm, 4 mm, 5 mm, 10 mm, 20 mm, 40 mm oder 80 mm ermöglichen.

Zur technischen Realisierung einer solchen Hebeeinrichtung bestehen im Rahmen der Erfindung verschiedene Möglichkeiten, die nachfolgend kurz beschrieben werden.

In einer Erfindungsvariante verläuft die Förderfläche im Wesentlichen waagerecht, wobei die Hebeeinrichtung den Fördergutträger mittels des berührungslosen Antriebssystems gegenüber der darunter befindlichen Förderfläche im Wesentlichen rechtwinklig zu der Förderfläche anhebt oder absenkt. Die Hebeeinrichtung ist hierbei also in das berührungslose Antriebssystem integriert, das zum Anheben bzw. Absenken des Fördergutträgers einfach entsprechend angesteuert werden muss.

In einer anderen Erfindungsvariante der Erfindung ist in die Hebeeinrichtung dagegen unabhängig von dem berührungslosen Antriebssystem, wobei die Hebeeinrichtung den Fördergutträger ebenfalls gegenüber der darunter befindlichen Förderfläche anhebt oder absenkt. Der Unterschied zwischen den beiden vorstehend genannten Erfindungsvarianten besteht darin, dass die Hebeeinrichtung bei der ersten Erfindungsvariante in das berührungslose Antriebssystem integriert ist, wohingegen die Hebeeinrichtung bei der vorstehend beschriebenen zweiten Erfindungsvariante unabhängig und getrennt von dem berührungslosen Antriebssystem ausgeführt ist.

In einer dritten Erfindungsvariante ist die Hebeeinrichtung ebenfalls von dem berührungslosen Antriebssystem unabhängig, wobei die Hebeeinrichtung den Fördergutträger zusammen mit dem darunter befindlichen Modul des Antriebssystems anhebt oder absenkt.

Es wurde vorstehend bereits erwähnt, dass bei einem Schneidvorgang die abgeschnittenen Scheiben vorzugsweise automatisch auf den Fördergutträger fallen. Der Fördergutträger wird deshalb bei einem Schneidvorgang vorzugsweise in der Falllinie der Scheiben angeordnet, so dass die Scheiben aufgrund der Gravitationskraft selbständig auf den Fördergutträger fallen. Hierbei kann sich dann auf dem Fördergutträger ein Scheibenstapel bilden, der aus mehreren übereinanderliegenden Scheiben besteht, wobei die Scheiben auch seitlich versetzt sein können, um dann einen geschindelten Scheibenstapel zu bilden.

Die Fallhöhe der Scheiben von der Schneideinrichtung auf die Oberseite des Scheibenstapels hängt hierbei von der Höhe des Scheibenstapels ab. Falls sich beispielsweise schon ein hoher Scheibenstapel auf dem Fördergutträger gebildet hat, so ist die Fallhöhe wesentlich geringer als beim Ablegen einer Scheibe auf einen Fördergutträger, der noch leer ist. Es ist jedoch grundsätzlich wünschenswert, dass die Fallhöhe der Scheiben im Betrieb konstant ist. Die vorstehend erwähnte Hebeeinrichtung kann deshalb bei einem Schneidvorgang so angesteuert werden, dass der Fördergutträger jeweils nach dem Ablegen einer Scheibe geringfügig abgesenkt wird, um die Fallhöhe der Scheiben konstant zu halten. Auf diese Weise kann erreicht werden, dass die Fallhöhe der Scheiben beim Bilden eines Scheibenstapels unabhängig von der Höhe des Scheibenstapels ist.

Weiterhin ist zu erwähnen, dass die Schneideinrichtung mehrspurig arbeiten kann und dann mehrere parallele Förderspuren aufweist, in denen die Nahrungsmittelartikel (z.B. Fleischstücke, Salamistangen, Käsestücke) mit einer bestimmten Vorschubgeschwindigkeit in die Schneidebene bewegt werden, wo die nebeneinander befindlichen Nahrungsmittelartikel dann in Scheiben aufgeschnitten werden. Bei einem solchen mehrspurigen Schneidvorgang weist der Unstetigförderer dann vorzugsweise auch mehrere Fördergutträger auf, die den einzelnen Förderspuren der Schneideinrichtung zugeordnet sind. Die Nahrungsmittelverarbeitungseinrichtung kann die Nahrungsmittelartikel dann also mehrspurig aufschneiden und auch mehrspurig durch Fördergutträger abfördern. Hierbei besteht auch die Möglichkeit, dass mehrere Fördergutträger zusammenwirken und gemeinsam mit Scheiben beladen werden.

Bei der vorstehend beschriebenen mehrspurigen Scheibenablage auf mehreren Fördergutträgern besteht auch die Möglichkeit, dass die einzelnen Fördergutträger jeweils nach der Aufnahme einer Scheibe um einen vorgegebenen Versatz in einer bestimmten Richtung vorwärts bewegt werden, so dass die Scheiben auf dem Fördergutträger eine geschindelte Portion bilden. Der Versatz zwischen den Ablagen der aufeinanderfolgenden Scheiben kann hierbei individuell für die einzelnen Fördergutträger eingestellt werden, so dass individuell für die einzelnen Förderspuren eine gewünschte Portionsform eingestellt werden kann. Beispielsweise kann ein normaler Scheibenstapel realisiert werden, ein geschindelter Scheibenstapel, oder eine oval gelegte Form von Scheiben, um nur einige Beispiele zu nennen.

Gemäß der Erfindung weist die Nahrungsmittelverarbeitungseinrichtung zusätzlich eine Waage auf, um das Gewicht des Fördergutträgers mit den darauf abgelegten Scheiben zu messen.

Gemäß der Erfindung ist die Waage in das berührungslose Antriebssystem integriert. So hält das berührungslose Antriebssystem den einzelnen Fördergutträger in der Praxis in einem Schwebezustand über der darunter befindlichen Förderfläche, wobei sich zwischen der Förderfläche und dem Fördergutträger ein Spalt befindet. Die Größe dieses Spalts hängt zum einen von dem Gesamtgewicht des Fördergutträgers einschließlich dem darauf befindlichen Fördergut und zum anderen von der Antriebsleistung des Antriebssystems ab, mit der der Fördergutträger in der Schwebe gehalten wird. In dieser Erfindungsvariante weist die Nahrungsmittelverarbeitungseinrichtung eine Messvorrichtung auf, die den Abstand zwischen dem Fördergutträger und der Förderfläche misst, d.h. die Größe des Spalts zwischen dem Fördergutträger und der Förderfläche. Darüber hinaus ist eine Steuereinrichtung vorgesehen, um das Gewicht des Fördergutträgers mit dem darauf befindlichen Fördergut zu ermitteln. Hierzu bestehen grundsätzlich zwei Möglichkeiten, die nachfolgend kurz beschrieben werden.

Eine Möglichkeit sieht vor, dass die Steuereinrichtung das berührungslose Antriebssystem so ansteuert, dass der Spalt zwischen dem Fördergutträger und der darunter befindlichen Förderfläche unabhängig von dem Gewicht des Förderguts konstant bleibt. Hierzu wird die Antriebsleistung angepasst, mit der das berührungslose Antriebssystem angesteuert wird, um den Fördergutträger in der Schwebe zu halten. Die hierzu erforderliche Antriebsleistung wird dann als Maß für das Gesamtgewicht des Fördergutträgers herangezogen.

Eine andere Möglichkeit sieht dagegen vor, dass die Antriebsleistung des berührungslosen Antriebssystems konstant gehalten wird, so dass der Abstand zwischen dem Fördergutträger und der darunter befindlichen Förderfläche dann in Abhängigkeit von dem Gesamtgewicht des Fördergutträgers variiert und somit als Maß für das Gewicht des Fördergutträgers dienen kann.

Die vorstehend genannte Messvorrichtung zur Bestimmung des Abstands zwischen dem Fördergutträger und der darunter befindlichen Förderfläche kann beispielsweise einen Abstandssensor oder eine Kamera umfassen, um nur einige Beispiele zu nennen.

Darüber hinaus kann die erfindungsgemäße Nahrungsmittelverarbeitungseinrichtung auch ein herkömmliches Förderband aufweisen, das die Nahrungsmittelartikel fördert, insbesondere parallel zu der Förderfläche des berührungslosen Antriebssystems. Zur Förderung der Nahrungsmittelartikel kann also ein Hybridsystem vorgesehen sein, das zum einen Förderbänder und zum anderen Unstetigförderer aufweist. Der Unstetigförderer bewegt die Fördergutträger dann vorzugsweise zu dem Förderband, wo das Fördergut (z.B. Scheibenstapel) dann an das herkömmliche Förderband übergeben wird.

Ferner ist zu erwähnen, dass die Erfindung nicht nur Schutz beansprucht für die vorstehend beschriebene erfindungsgemäße Nahrungsmittelverarbeitungseinrichtung. Vielmehr beansprucht die Erfindung auch Schutz für ein entsprechendes Betriebsverfahren. Die einzelnen Verfahrensschritte des erfindungsgemäßen Betriebsverfahrens ergeben sich bereits aus der vorstehenden Beschreibung der erfindungsgemäßen Nahrungsmittelverarbeitungseinrichtung, so dass auf eine separate Beschreibung des Betriebsverfahrens verzichtet werden kann.

Andere vorteilhafte Weiterbildungen der Erfindung sind in den Unteransprüchen gekennzeichnet oder werden nachstehend zusammen mit der Beschreibung der bevorzugten Ausführungsbeispiele der Erfindung anhand der Figuren näher erläutert.
Figur 1 zeigt eine schematische Seitenansicht einer erfindungsgemäßen Nahrungsmittelverarbeitungseinrichtung.
Figur 2 zeigt eine schematische Aufsicht auf die Nahrungsmittelverarbeitungseinrichtung aus Figur 1.
Figur 3 zeigt eine Seitenansicht eines einzelnen Fördergutträgers der Nahrungsmittelverarbeitungseinrichtung aus den Figuren 1 und 2.
Figur 4 zeigt eine Aufsicht auf den Fördergutträger gemäß Figur 3.
Figur 5 zeigt eine schematische Seitenansicht eines Abnahmeförderers zur Abnahme der Nahrungsmittelartikel von dem Fördergutträger.
Figur 6 zeigt eine schematische Seitenansicht eines nicht erfindungsgemäßen Ausführungsbeispiels der Nahrungsmittelverarbeitungseinrichtung mit einer senkrechten Ausrichtung der Förderfläche.
Figur 7 zeigt eine Frontansicht der Schneideinrichtung aus Figur 6.
Figuren 8A-8C zeigen beispielhaft verschiedene Portionsformen, die mit der erfindungsgemäßen Nahrungsmittelverarbeitungseinrichtung realisiert werden können.
Figur 9 zeigt eine Abwandlung von Figur 3 mit einem integrierten Piezoelement zur Gewichtsmessung.

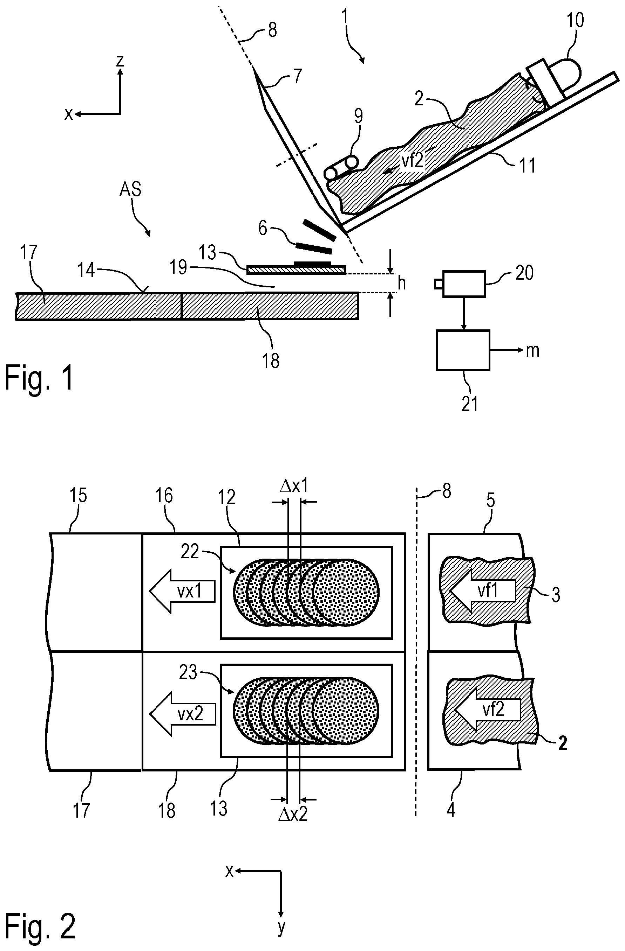

Im Folgenden wird nun das Ausführungsbeispiel gemäß den Figuren 1-5 beschrieben.

Zunächst weist die Nahrungsmittelverarbeitungseinrichtung in diesem Ausführungsbeispiel eine Schneideinrichtung 1 auf, die weitgehend herkömmlich ausgebildet sein kann und Nahrungsmittelartikel 2, 3 in zwei parallelen Förderspuren 4, 5 in Scheiben 6 aufschneidet.

Hierzu weist die Schneideinrichtung 1 ein Schneidmesser 7 auf, das im Betrieb in einer Schneidebene 8 rotiert und von einem nicht dargestellten Elektromotor angetrieben wird.

Darüber hinaus weist die Schneideinrichtung 1 eine Vorschubeinrichtung auf, die die Nahrungsmittelartikel 2, 3 mit einer bestimmten Vorschubgeschwindigkeit vf1, vf2 in die Schneidebene 8 bewegt. Hierzu kann die Vorschubeinrichtung ein Förderband 9 aufweisen, dass die Nahrungsmittelartikel 2 bzw. 3 an der Oberseite ergreift und in die Schneidebene 8 fördert. Darüber hinaus kann die Vorschubeinrichtung auch einen Greifer 10 aufweisen, der die Nahrungsmittelartikel 2, 3 an ihrer Rückseite greift und in die Schneidebene 8 schiebt. In der Seitenansicht in Figur 1 sind nur das Förderband 9 und der Greifer 10 für den Nahrungsmittelartikel 2 dargestellt. Auf der gegenüberliegenden Seite befindet sich jedoch auch ein nicht erkennendes Förderband für den anderen Nahrungsmittelartikel 3 und ebenfalls ein zugehöriger Greifer für den Nahrungsmittelartikel 3. Die Nahrungsmittelartikel 2, 3 werden hierbei auf einer geneigten Produktauflage 11 in die Schneidebene 8 gefördert, wie es an sich aus dem Stand der Technik bekannt ist. Die vorstehend beschriebe Konstruktion der Vorschubeinrichtung ist jedoch nur beispielhaft, da im Rahmen der Erfindung auch andere Gestaltungen der Vorschubeinrichtung möglich sind.

Darüber hinaus weist die Nahrungsmittelverarbeitungseinrichtung in diesem Ausführungsbeispiel mehrere Fördergutträger 12, 13 auf, die von einem berührungslosen Antriebssystem AS parallel zu einer horizontalen Förderfläche 14 bewegt werden können. Das berührungslose Antriebssystem AS ist hierbei aus mehreren rechteckigen Modulen 15-18 zusammengesetzt, die lückenlos zusammengesetzt sind und die durchgehende Förderfläche 14 bilden. Zur Vereinfachung sind hierbei nur die vier Module 15-18 dargestellt. In der Praxis ist die Förderfläche 14 jedoch aus einer größeren Anzahl von Modulen zusammengesetzt. Das berührungslose Antriebssystem AS arbeitet hier gemäß der Magnetschwebetechnik, wie es von dem eingangs erwähnten kommerziell erhältlichen System "XPlanar" bekannt ist. So zeigt Figur 1, dass der Fördergutträger 13 über der Förderfläche 14 in der Schwebe gehalten wird, so dass sich zwischen dem Fördergutträger 13 und der Förderfläche 14 ein Spalt 19 bildet. Die Höhe h des Spalts 19 wird hierbei von einer Kamera 20 erfasst und an eine Steuereinrichtung 21 weitergemeldet, die daraus die Gesamtmasse m des Fördergutträgers 13 mit dem darauf befindlichen Fördergut ermittelt. Eine Möglichkeit hierzu besteht darin, dass die Antriebsleistung des berührungslosen Antriebssystems AS so geregelt wird, dass die Höhe h des Spalt 19 unabhängig vom Gesamtgewicht m des Fördergutträgers 13 konstant bleibt. Die hierfür erforderliche Antriebsleistung bildet dann ein Maß für die Gesamtmasse m des Fördergutträgers 13.

Bei einem Schneidvorgang werden die Fördergutträger 12, 13 unterhalb der Schneideinrichtung in der Falllinie der Scheiben 6 angeordnet, so dass die Scheiben 6 auf den Fördergutträger 13 bzw. 14 fallen und dort Scheibenstapel 22, 23 bilden.

Aus Figur 2 ist ersichtlich, dass die Scheibenstapel 22, 23 geschindelt sind. Dies bedeutet, dass die übereinander liegenden Scheiben einen bestimmten Versatz Δx1 bzw. Δx2 zueinander aufweisen. Zur Realisierung dieser geschindelten Scheibenstapel 22, 23 werden die Fördergutträger 12, 13 nach der Ablage jeder der Scheiben 6 um den entsprechenden Versatz Δx1 bzw. Δx2 bewegt, damit sich der gewünschte Scheibenversatz einstellt.

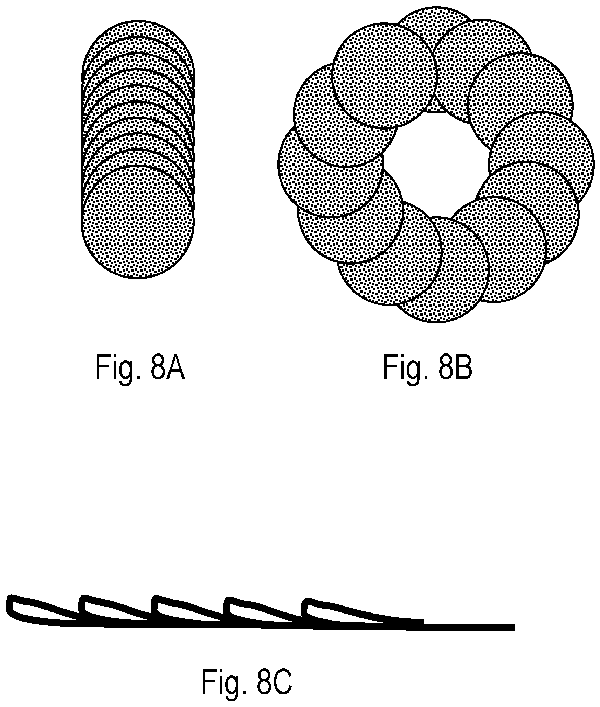

Es besteht jedoch im Rahmen der Erfindung auch die Möglichkeit, dass andere Portionsformen erzeugt werden, wie sie beispielsweise in den Figuren 8A-8C dargestellt sind, wie noch detailliert beschrieben wird. Hierbei ist zu erwähnen, dass die verschiedenen Portionsformen ohne Hardware-Anpassungen alleine durch eine Software-Änderung realisiert werden können. Dadurch unterscheidet sich die erfindungsgemäße Nahrungsmittelverarbeitungseinrichtung von herkömmlichen Nahrungsmittelverarbeitungseinrichtungen, bei denen eine Änderung der Portionsform nur mit mechanischen Änderungen möglich ist.

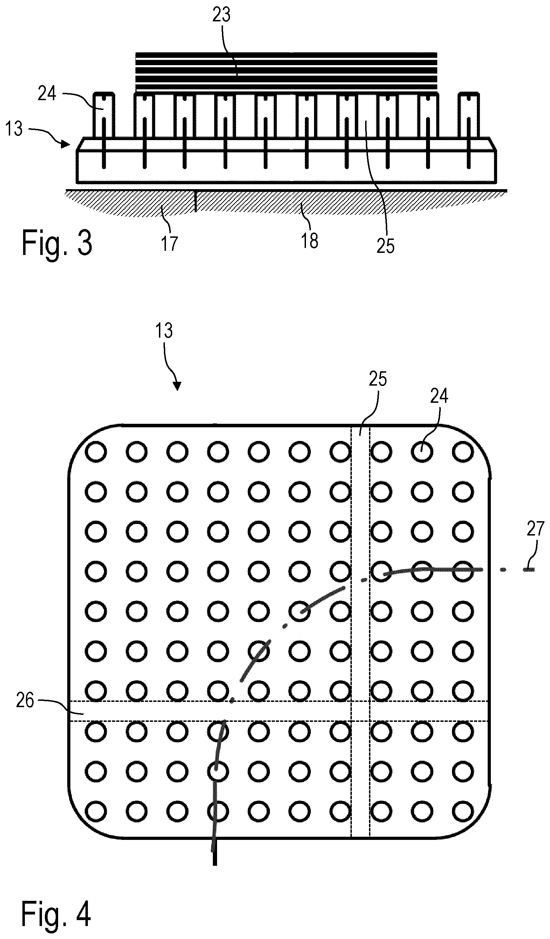

Im Folgenden wird nun der Fördergutträger 13 näher beschrieben, wobei auf die Figuren 3 und 4 Bezug genommen wird. Grundsätzlich sind der Aufbau und die Funktionsweise des Fördergutträgers aus der früheren Patentanmeldung DE 10 2020 105 678.8 bekannt, so dass der Inhalt dieser Patentanmeldung der vorliegenden Beschreibung hinsichtlich der Konstruktion des Fördergutträgers 13 in vollem Umfang zuzurechnen ist. Weiterhin ist zu erwähnen, dass die anderen Fördergutträger in gleicher Weise aufgebaut sein können.

An der Oberseite des Fördergutträgers 13 befinden sich zahlreiche Stifte 24, die jeweils einen zylindrischen Querschnitt haben und senkrecht nach oben abstehen. Die Stifte 24 sind hierbei matrixförmig in Zeilen und Spalten angeordnet, wobei zwei Spalten der Stifte 24 jeweils eine Vertiefung 25 einschließen, wie auch zwei Zeilen der Stifte 24 eine Vertiefung 26 einschließen.

In Figur 4 ist beispielhaft dargestellt, dass der Fördergutträger 13 entlang einem gekrümmten Förderweg 27 bewegt werden kann, wobei der dargestellte Verlauf des Förderwegs 27 nur beispielhaft ist.

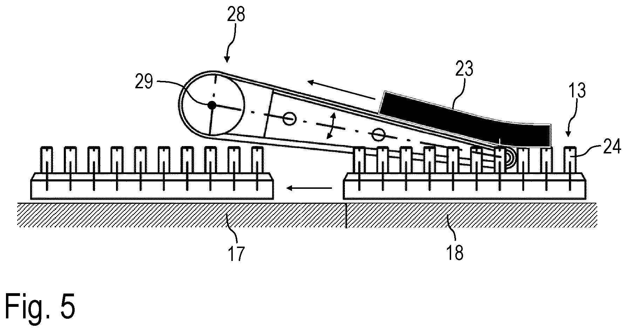

Die Vertiefungen 25, 26 dienen zur Abnahme des Scheibenstapels 23 von dem Fördergutträger 13, wie aus Figur 5 ersichtlich ist. Hierzu ist ein schwenkbarer Abnahmeförderer 28 vorgesehen, der um eine Schwenkachse 29 in Richtung des Doppelpfeils schwenkbar ist. Der Abnahmeförderer 28 besteht aus mehreren parallelen schmalen Messerförderbändern (Fingerförderbänder), die jeweils in die Vertiefungen 25 bzw. 26 zwischen den Stiften 24 des Fördergutträgers 13 eintauchen können, um den Scheibenstapel 23 dann abzufördern. Der Aufbau und die Funktionsweise des Abnahmeförderers 28 sind auch in der früheren Patentanmeldung DE 10 2020 105 678.8 beschrieben, so dass der Inhalt dieser früheren Patentanmeldung der vorliegenden Beschreibung hinsichtlich des konstruktiven Aufbaus und der Funktionsweise des Abnahmeförderers 28 in vollem Umfang zuzurechnen ist.

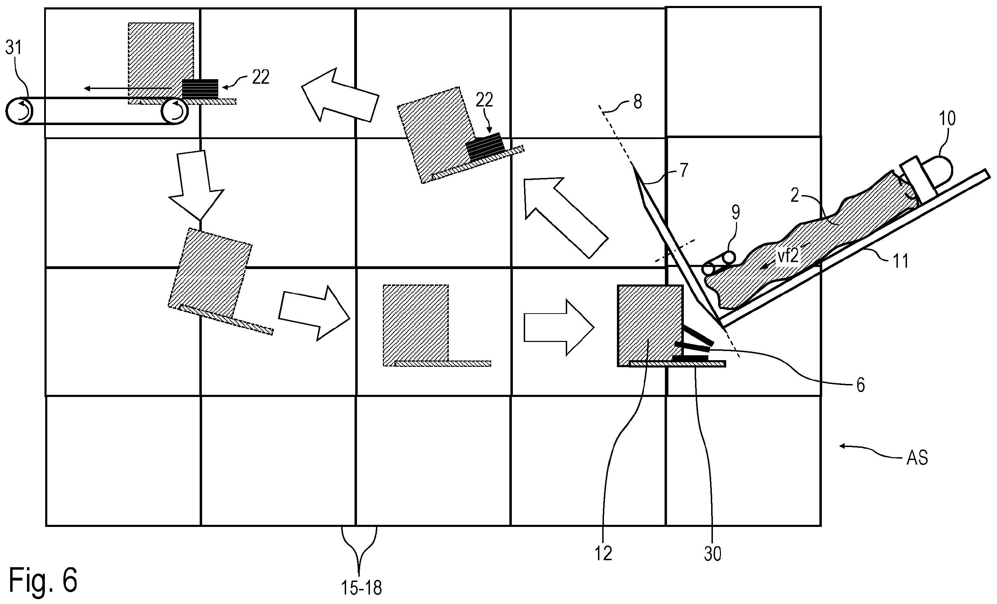

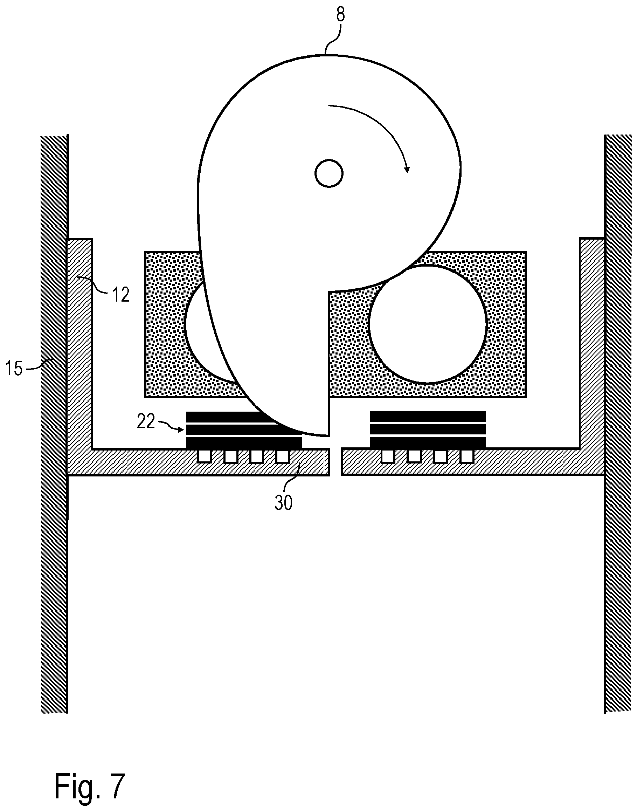

Im Folgenden wird nun das nicht erfindungsgemäße Ausführungsbeispiel einer Nahrungsmittelverarbeitungseinrichtung beschrieben, das in den Figuren 6 und 7 schematisch dargestellt ist.

Die Schneideinrichtung 1 stimmt bei diesem Ausführungsbeispiel weitgehend mit dem vorstehend beschriebenen Ausführungsbeispiel überein, so dass zur Vermeidung von Wiederholungen auf die vorstehende Beschreibung verwiesen wird, wobei für entsprechende Einzelheiten dieselben Bezugszeichen verwendet werden.

Eine Besonderheit dieses Ausführungsbeispiels besteht jedoch darin, dass die Förderfläche des berührungslosen Antriebssystems AS hierbei senkrecht ausgerichtet wird, d.h. parallel zur Zeichenebene. Der Fördergutträger 12 kann hierbei also in senkrechter und waagerechter Richtung parallel zu der Förderfläche bewegt werden, wobei die Förderfläche lückenlos aus den hier nur schematisch dargestellten Modulen 15-18 zusammengesetzt ist. Hierbei ist der Förderweg innerhalb der Förderfläche frei programmierbar.

An dem Fördergutträger 12 ist hierbei eine Ladefläche 30 angebracht, die rechtwinklig zu der Förderfläche des berührungslosen Antriebssystems AS ausgerichtet ist und zur Aufnahme der Scheiben 6 dient. Die Ladefläche kann hierbei in der Weise ausgebildet sein, wie es in der deutschen Patentanmeldung DE 10 2020 105 678.8 beschrieben ist. Der Inhalt dieser Patentanmeldung ist deshalb der vorliegenden Beschreibung in vollem Umfang zuzurechnen.

Zur Scheibenablage von der Schneideinrichtung 1 wird der Fördergutträger 12 dann von dem berührungslosen Antriebssystem AS so positioniert, dass sich die Ladefläche 30 in der Falllinie der Scheiben 6 befindet, so dass die von der Schneideinrichtung 1 abgeschnittenen Scheiben auf die Ladefläche 30 fallen.

Nach der Ablage des Scheibenstapels 22 auf der Ladefläche 30 des Fördergutträgers 12 wird der Fördergutträger 12 dann in Richtung der Blockpfeile zu einem Förderband 31 bewegt, das den Scheibenstapel 22 von dem Fördergutträger 12 übernimmt. Hierbei erfolgt die Abnahme des Scheibenstapels 22 von der Ladefläche 30 des Fördergutträgers 12 durch einen Abnahmeförderer mit mehreren parallelen Messerfördern, die in langgestreckte Vertiefungen (vgl. Fig. 7) in der Ladefläche 30 eintauchen und den Scheibenstapel 21 dadurch untergreifen. Die Einzelheiten der Produktabnahme von der Ladefläche 30 des Fördergutträgers 12 sind in der deutschen Patentanmeldung DE 10 2020 105 678.8 beschrieben. Der Abnahmeförderer ist hierbei zur Vereinfachung nicht dargestellt.

Anschließend wird der Fördergutträger 12 dann wieder in Richtung der Blockpfeile zu der Schneidstation 1 bewegt, um einen neuen Scheibenstapel aufzunehmen.

Bei der Bewegung des beladenen Fördergutträgers 12 kann dieser um eine rechtwinklig zur Zeichenebene verlaufende Schwenkachse gekippt werden, um zu verhindern, dass der Scheibenstapel 22 aufgrund der bei der Bewegung auftretenden Trägheitskräfte von der Ladefläche 30 rutscht. Hierzu wird der Fördergutträger 12 bei einer Beschleunigung in der Bewegungsrichtung nach vorne gekippt.

Figur 7 zeigt eine schematische Frontansicht des vorstehend beschriebenen Ausführungsbeispiels gemäß Figur 6. Aus dieser Darstellung ist ersichtlich, dass die Nahrungsmittelverarbeitungseinrichtung spiegelbildlich aufgebaut sein kann mit zwei gegenüberliegenden Förderflächen, die parallel zueinander ausgerichtet sind.

Die Figuren 8A-8C zeigen verschiedene Portionsformen, die mit der erfindungsgemäßen Nahrungsmittelverarbeitungseinrichtung realisiert werden können.

So zeigt Figur 8A einen geschindelten Scheibenstapel. Zur Realisierung dieser Portionsformen muss der jeweilige Fördergutträger nach der Ablage einer Scheibe jeweils um einen bestimmten Versatz weiterbewegt werden und zwar in linearer Richtung.

Figur 8B zeigt dagegen eine andere Portionsform, bei der die einzelnen Scheiben kreisförmig geschindelt übereinandergelegt sind. Zur Realisierung dieser Portionsform muss der zugehörige Fördergutträger bei der Ablage der Scheiben um die Hochachse gedreht werden, so dass die Scheiben dann nacheinander entsprechend der Kreisform geschindelte auf den Fördergutträger fallen.

Ferner zeigt Figur 8C eine gefaltete Anordnung der einzelnen Scheiben, die ebenfalls durch eine entsprechende Bewegung des zugehörigen Fördergutträgers bei der Scheibenablage realisiert werden kann.

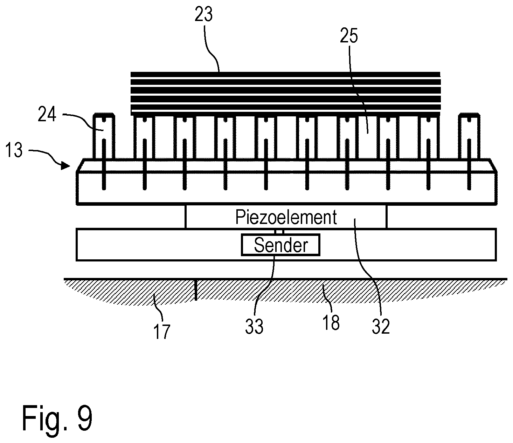

Schließlich zeigt Figur 9 eine Abwandlung von Figur 3, so dass zur Vermeidung von Wiederholungen auf die vorstehende Beschreibung zu Figur 3 verwiesen wird, wobei für entsprechende Einzelheiten dieselben Bezugszeichen verwendet werden.

Eine Besonderheit dieses Ausführungsbeispiels besteht darin, dass in den Fördergutträger 13 ein Piezoelement 32 integriert ist, das zur Gewichtsmessung dient. Das Piezoelement 32 wird in Abhängigkeit vom Gewicht des Förderguts mehr oder weniger komprimiert und gibt ein entsprechendes Gewichtssignal an einen Sender 33 aus, der das Gewichtssignal dann drahtlos an eine Auswertungseinheit überträgt. Beispielsweise kann der Sender 33 als Bluetooth-Sender, als RFID-Sender oder als NFC-Sender ausgebildet sein, um nur einige Beispiele zu nennen.

### Bezugszeichenliste

- 1: Schneideinrichtung
- 2, 3: Nahrungsmittelartikel
- 4, 5: Förderspuren der Schneideinrichtung
- 6: Scheiben
- 7: Schneidmesser
- 8: Schneidebene
- 9: Förderband der Vorschubeinrichtung der Schneideinrichtung
- 10: Greifer der Vorschubeinrichtung der Schneideinrichtung
- 11: Produktauflage
- 12, 13: Fördergutträger
- 14: Förderfläche
- 15-18: Module des Antriebssystems
- 19: Spalt zwischen Förderfläche und Fördergutträger
- 20: Kamera
- 21: Steuereinrichtung
- 22, 23: Geschindelter Scheibenstapel
- 24: Stifte an der Oberseite des Fördergutträgers
- 25, 26: Vertiefungen zwischen den Stiften
- 27: Förderweg
- 28: Abnahmeförderer zur Abnahme der Nahrungsmittelartikel von dem Fördergutträger
- 29: Schwenkachse des Abnahmeförderers
- 30: Ladefläche an dem Fördergutträger
- 31: Förderband
- 32: Piezoelement zur Gewichtsmessung
- 33: Sender zur Übertragung des Gewichtssignals
- AS: Berührungsloses Antriebssystem
- h: Höhe des Spalts zwischen Förderfläche und Fördergutträger
- m: Masse des Fördergutträgers
- vf1, vf2: Vorschubgeschwindigkeit in den Förderspuren der Schneideinrichtung
- vx1, vx2: Vorschubgeschwindigkeit auf der Förderfläche
- Δx1, Δx2: Versatz bei der Ablage der Scheiben

## Patentansprüche

1. Nahrungsmittelverarbeitungseinrichtung zum Aufschneiden von Nahrungsmittelartikeln (2, 3) in Scheiben (6), mit
a) einer Schneideinrichtung (1) zum Abschneiden der Scheiben (6) von den Nahrungsmittelartikeln (2, 3), und
b) einem Förderer (AS, 12-18) zur Aufnahme der abgeschnittenen Scheiben (6) nach einem Schneidvorgang, wobei
b1) der Förderer (AS, 12-18) ein Unstetigförderer ist, der die abgelegten Scheiben (6) im Gegensatz zu einem Förderband unstetig fördert,
b2) der Unstetigförderer (AS, 12-18) mindestens einen Fördergutträger (12, 13) aufweist, der innerhalb einer Förderfläche (14) in zwei Dimensionen (x, y) ohne Bindung an einen festen Förderweg (27) frei verfahrbar ist und die abgeschnittenen Scheiben (6) aufnimmt, und
b3) der Unstetigförderer (AS, 12-18) ein berührungsloses Antriebssystem (AS) aufweist, das den Fördergutträger (12, 13) innerhalb der Förderfläche (14) entlang einem frei programmierbaren Förderweg (27) bewegt und zwar ohne einen Berührungskontakt zwischen dem Fördergutträger (12, 13) einerseits und der Förderfläche (14) andererseits,
**dadurch gekennzeichnet,**
c) **dass** die Nahrungsmittelverarbeitungseinrichtung eine Waage aufweist, um das Gewicht des Fördergutträgers mit den darauf abgelegten Scheiben (6) zu messen,
d) **dass** die Waage in das berührungslose Antriebssystem (AS) integriert ist,
e) **dass** das berührungslose Antriebssystem (AS) den Fördergutträger (12, 13) mit einer bestimmten Antriebsleistung in der Schwebe hält,
f) **dass** sich in Abhängigkeit von dem Gewicht des Fördergutträgers mit den darauf abgelegten Scheiben (6) und der Antriebsleistung des Antriebssystems (AS) ein Abstand einstellt zwischen dem Fördergutträger (12, 13) und der Förderfläche (14),
g) **dass** die Nahrungsmittelverarbeitungseinrichtung eine Messvorrichtung (20) aufweist, die den Abstand zwischen dem Fördergutträger (12, 13) und der Förderfläche (14) misst,
h) **dass** eine Steuereinrichtung vorgesehen ist, die
h1) den Abstand zwischen dem Fördergutträger (12, 13) und der Förderfläche (14) durch eine Anpassung der Antriebsleistung konstant hält und die dafür erforderliche Antriebsleistung als Maß für das Gewicht ausgibt, oder
h2) die Antriebsleistung konstant hält und den gewichtsabhängigen Abstand zwischen dem Fördergutträger (12, 13) und der Förderfläche (14) als Maß für das Gewicht ausgibt.

2. Nahrungsmittelverarbeitungseinrichtung nach Anspruch 1, **dadurch gekennzeichnet,**
a) **dass** das berührungslose Antriebssystem (AS) mehrere Module (15-18) aufweist, die vorzugsweise lückenlos aneinander angrenzen und die durchgehende Förderfläche (14) bilden, wobei der Förderweg (27) innerhalb der Förderfläche (14) frei programmierbar ist,
b) **dass** die einzelnen Module (15-18) optional rechteckig sind, um die Förderfläche (14) lückenlos aus den Modulen (15-18) zusammensetzen zu können.

3. Nahrungsmittelverarbeitungseinrichtung nach einem der vorhergehenden Ansprüche, **dadurch gekennzeichnet,**
a) **dass** die Nahrungsmittelverarbeitungseinrichtung eine Hebeeinrichtung aufweist, um den Fördergutträger (12, 13) anzuheben oder abzusenken, , und
b) **dass** die Hebeeinrichtung vorzugsweise einen vertikalen Hub des Fördergutträgers von mindestens 2mm, 3mm, 4mm, 5mm, 10mm, 20mm, 40mm oder 80mm ermöglicht.

4. Nahrungsmittelverarbeitungseinrichtung nach Anspruch 3, **dadurch gekennzeichnet,**
a) **dass** die Förderfläche (14) im Wesentlichen waagerecht verläuft und die Hebeeinrichtung den Fördergutträger (12, 13) mittels des berührungslosen Antriebssystems (AS) gegenüber dem darunter befindlichen Modul der Förderfläche (14) in im Wesentlichen rechtwinklig zu der Förderfläche (14) anhebt oder absenkt, oder
b) **dass** die Förderfläche (14) im Wesentlichen waagerecht verläuft und die Hebeeinrichtung den Fördergutträger (12, 13) unabhängig von dem berührungslosen Antriebssystem (AS) gegenüber dem darunter befindlichen Modul der Förderfläche (14) in senkrechter Richtung anhebt oder absenkt, oder
c) **dass** die Förderfläche (14) im Wesentlichen waagerecht verläuft und die Hebeeinrichtung den Fördergutträger (12, 13) zusammen mit dem darunter befindlichen Modul des Antriebssystems (AS) anhebt oder absenkt.

5. Nahrungsmittelverarbeitungseinrichtung nach Anspruch 3 oder 4,
**dadurch gekennzeichnet,**
a) **dass** die Nahrungsmittelverarbeitungseinrichtung eine Steuereinrichtung (21) aufweist, welche die Hebeeinrichtung ansteuert und die Höhenlage (h) des Fördergutträgers festlegt, und
b) **dass** die Steuereinrichtung (21) die Hebeeinrichtung bei einem Schneidvorgang so ansteuert, dass der Fördergutträger (12, 13) jeweils nach dem Abschneiden einer Scheibe (6) abgesenkt wird, insbesondere um jeweils eine Scheibendicke, so dass die Fallhöhe der Scheiben (6) von der Schneideinrichtung (1) auf die Oberseite einer mehrere Scheiben umfassenden Portion unabhängig von der Höhe der Portion konstant bleibt.

6. Nahrungsmittelverarbeitungseinrichtung nach einem der vorhergehenden Ansprüche, **dadurch gekennzeichnet,**
a) **dass** die Schneideinrichtung (1) eine Schneidebene (8) aufweist, in der die Nahrungsmittelartikel (2, 3) in die Scheiben (6) aufgeschnitten werden,
b) **dass** die Nahrungsmittelverarbeitungseinrichtung eine Vorschubeinrichtung (9, 10) aufweist, um die Nahrungsmittelartikel (2, 3) zum Aufschneiden in die Schneidebene (8) zu fördern,
c) **dass** Vorschubeinrichtung (9, 10) mehrere parallele Förderspuren (4, 5) aufweist, um nebeneinander mehrere Nahrungsmittelartikel (2, 3) in die Schneidebene (8) zu fördern, und
d) **dass** die Scheiben (6) von den nebeneinander aufgeschnittenen Nahrungsmittelartikeln (2, 3) auf jeweils mindestens einen Fördergutträger (12, 13) fallen, so dass für jede der Förderspuren (4, 5) jeweils mindestens ein Fördergutträger (12, 13) vorgesehen ist.

7. Nahrungsmittelverarbeitungseinrichtung nach Anspruch 6, **dadurch gekennzeichnet,**
a) **dass** die Fördergutträger (12, 13) jeweils nach der Aufnahme einer Scheibe (6) um einen vorgegebenen Versatz (Δx1, Δx2) in einer Förderrichtung (x) vorwärts bewegt werden, so dass die Scheiben (6) auf dem Fördergutträger (12, 13) jeweils eine geschindelte Portion bilden, und
b) **dass** der Versatz (Δx1, Δx2) individuell für die einzelnen Fördergutträger (12, 13) einstellbar ist, so dass die geschindelten Portionen auf den einzelnen Fördergutträgern einen individuell einstellbaren Überlappungsgrad der Scheiben (6) aufweisen.

8. Nahrungsmittelverarbeitungseinrichtung nach einem der vorhergehenden Ansprüche, **dadurch gekennzeichnet, dass** die Messvorrichtung folgendes aufweist:
a) einen Abstandssensor,
b) eine Kamera (20).

9. Nahrungsmittelverarbeitungseinrichtung nach Anspruch 8,
**dadurch gekennzeichnet,**
a) **dass** die Nahrungsmittelverarbeitungseinrichtung ein Förderband aufweist, das die Nahrungsmittelartikel (2, 3) fördert, insbesondere parallel zu der Förderfläche (14) des berührungslosen Antriebssystems (AS), und
b) **dass** das berührungslose Antriebssystem (AS) die Fördergutträger (12, 13) zu dem Förderband bewegt, um die Nahrungsmittelartikel (2, 3) von dem Fördergutträger (12, 13) an das Förderband zu übergeben.

10. Betriebsverfahren für eine Nahrungsmittelverarbeitungseinrichtung nach einem der vorhergehenden Ansprüche, mit den folgenden Schritten:
a) Schneiden eines Nahrungsmittelartikels (2, 3) in Scheiben (6) mittels der Schneideinrichtung (1), und
b) Ablegen der abgeschnittenen Scheiben (6) auf dem Förderer (AS, 12-18),
c) wobei der Förderer (AS, 12-18) ein Unstetigförderer ist, der die abgelegten Scheiben (6) im Gegensatz zu einem Förderband unstetig fördert.
**gekennzeichnet durch** folgenden Schritt:
d) Wiegen des Fördergutträgers mit den darauf abgelegten Scheiben (6).

11. Betriebsverfahren nach Anspruch 9, **dadurch gekennzeichnet, dass** der Unstetigförderer mindestens einen Fördergutträger (12, 13) aufweist, der innerhalb einer im Wesentlichen horizontalen Förderfläche (14) in zwei Dimensionen frei verfahrbar ist und die abgeschnittenen Scheiben (6) aufnimmt.

12. Betriebsverfahren nach Anspruch 11, **dadurch gekennzeichnet,**
a) **dass** der Fördergutträger (12, 13) in senkrechter Richtung angehoben und abgesenkt werden kann,
b) **dass** der Fördergutträger (12, 13) jeweils nach dem Abschneiden einer Scheibe (6) abgesenkt wird, insbesondere um jeweils eine Scheibendicke, so dass die Fallhöhe der Scheiben (6) von der Schneideinrichtung (1) auf die Oberseite einer mehrere Scheiben umfassenden Portion unabhängig von der Höhe der Portion konstant bleibt.

13. Betriebsverfahren nach einem der Ansprüche 10 bis 12, **dadurch gekennzeichnet,**
a) **dass** die Schneideinrichtung (1) eine Schneidebene (8) aufweist, in der die Nahrungsmittelartikel (2, 3) in die Scheiben (6) aufgeschnitten werden,
b) **dass** die Nahrungsmittelverarbeitungseinrichtung eine Vorschubeinrichtung (9, 10) aufweist, um die Nahrungsmittelartikel (2, 3) zum Aufschneiden in die Schneidebene (8) zu fördern,
c) **dass** Vorschubeinrichtung (9, 10) mehrere parallele Förderspuren (4, 5) aufweist, um nebeneinander mehrere Nahrungsmittelartikel (2, 3) in die Schneidebene (8) zu fördern, und
d) **dass** die Scheiben (6) von den nebeneinander aufgeschnittenen Nahrungsmittelartikeln (2, 3) auf jeweils einen Fördergutträger (12, 13) fallen, so dass für jede der Förderspuren (4, 5) jeweils ein Fördergutträger (12, 13) vorgesehen ist.

14. Betriebsverfahren nach Anspruch 13, **dadurch gekennzeichnet,**
a) **dass** die Fördergutträger (12, 13) jeweils nach der Aufnahme einer Scheibe (6) um einen vorgegebenen Versatz bewegt werden, so dass die Scheiben (6) auf dem Fördergutträger (12, 13) jeweils eine geschindelte Portion bilden, und
b) **dass** der Versatz individuell für die einzelnen Fördergutträger (12, 13) festgelegt wird, so dass die geschindelten Portionen auf den einzelnen Fördergutträgern einen individuell einstellbaren Überlappungsgrad der Scheiben (6) aufweisen.

15. Betriebsverfahren nach einem der Ansprüche 10 bis 14,
**dadurch gekennzeichnet,**
a) **dass** die Scheiben (6) in einer bestimmten Portionsform auf dem Fördergutträger (12, 13) abgelegt werden, und
b) **dass** der Fördergutträger (12, 13) zum Erzeugen der gewünschten Portionsform während der Ablage der Scheiben (6) auf dem Fördergutträger (12, 13) bewegt wird, insbesondere mit einer Drehung um eine senkrechte Drehachse und/oder einer Verschiebung in waagerechter Richtung.

## Claims

1. Food-processing device for cutting food products (2, 3) into slices (6), comprising
a) a cutting device (1) for cutting the slices (6) from the food products (2, 3), and
b) a conveyor (AS, 12-18) for receiving the cut slices (6) after a cutting operation, wherein
b1) the conveyor (AS, 12-18) is a discontinuous conveyor, which conveys the deposited slices (6) discontinuously in contrast to a conveyor belt,
b2) the discontinuous conveyor (AS, 12-18) comprises at least one conveyed-products carrier (12, 13) which can be moved freely in two dimensions (x, y) within a conveying surface (14) without being tied to a fixed conveying path (27) and receives the cut slices (6), and
b3) the discontinuous conveyor (AS, 12-18) comprises a contactless drive system (AS) which moves the conveyed-products carrier (12, 13) within the conveying surface (14) along a freely programmable conveying path (27) without contact between the conveyed-products carrier (12, 13) on the one hand and the conveying surface (14) on the other hand,
**characterized in,**
c) **that** the food-processing device comprises a scale for measuring the weight of the conveyed-products carrier with the slices (6) deposited thereon,
d) **that** the scale is integrated into the contactless drive system (AS),
e) **that** the contactless drive system (AS) suspends the conveyed-products carrier (12, 13) with a predetermined drive power,
f) **that** a distance occurs between the conveyed-products carrier (12, 13) and the conveying surface (14) as a function of the weight of the conveyed-products carrier with the slices (6) deposited thereon and the drive power of the drive system (AS),
g) **that** the food-processing device comprises a measuring device (20) which measures the distance between the conveyed-products carrier (12, 13) and the conveying surface (14),
h) **that** a control device is provided which
h1) keeps the distance between the conveyed-products carrier (12, 13) and the conveying surface (14) constant by adjusting the drive power and outputs the drive power required for this as a measure of the weight, or
h2) keeps the drive power constant and outputs the weight-dependent distance between the conveyed-products carrier (12, 13) and the conveying surface (14) as a measure of the weight.

2. Food-processing device according to claim 1, **characterized in**
a) **that** the contactless drive system (AS) comprises a plurality of modules (15-18) which preferably adjoin one another without gaps and form the continuous conveying surface (14), the conveying path (27) within the conveying surface (14) being freely programmable,
b) **that** the individual modules (15-18) are optionally rectangular in order to be able to assemble the conveying surface (14) from the modules (15-18) without gaps.

3. Food-processing device according to one of the preceding claims, **characterized in,**
a) **that** the food-processing device has a lifting device for raising or lowering the conveyed-products carrier (12, 13) in a direction, and
b) **that** the lifting device preferably allows a vertical stroke of the conveyed-products carrier of at least 2 mm, 3 mm, 4 mm, 5 mm, 10 mm, 20 mm, 40 mm or 80 mm.

4. Food-processing device according to claim 3, **characterized in,**
a) **that** the conveying surface (14) extends substantially horizontally and the lifting device raises or lowers the conveyed-products carrier (12, 13) by means of the contactless drive system (AS) with respect to the module of the conveying surface (14) located below it, substantially at right angles to the conveying surface (14), or
b) **that** the conveying surface (14) runs essentially horizontally and the lifting device raises or lowers the conveyed-products carrier (12, 13) in a vertical direction with respect to the module of the conveying surface (14) located underneath it, independently of the contactless drive system (AS), or
c) **that** the conveying surface (14) runs essentially horizontally and the lifting device raises or lowers the conveyed-products carrier (12, 13) together with the module of the drive system (AS) located underneath it.

5. Food-processing device according to claim 3 or 4, **characterized in**
a) that the food-processing device comprises a control device (21) which controls the lifting device and determines the height position (h) of the conveyed-products carrier, and
b) that the control device (21) controls the lifting device during a cutting operation in such a way that the conveyed-products carrier (12, 13) is lowered in each case after a slice (6) has been cut off, in particular by one slice thickness in each case, so that the height of fall of the slices (6) from the cutting device (1) onto the top side of a portion comprising several slices remains constant irrespective of the height of the portion.

6. Food-processing device according to one of the preceding claims, **characterized in,**
a) **that** the cutting device (1) comprises a cutting plane (8) in which the food products (2, 3) are cut into the slices (6),
b) **that** the food-processing device comprises a feeding device (9, 10) for conveying the food products (2, 3) into the cutting plane (8) for cutting,
c) **that** the feeding device (9, 10) comprises a plurality of parallel feed tracks (4, 5) for feeding a plurality of food products (2, 3) side by side into the cutting plane (8), and
d) **that** the slices (6) of the food products (2, 3) cut open next to one another fall onto at least one respective conveyed-products carrier (12, 13), so that at least one respective conveyed-products carrier (12, 13) is provided for each of the conveying tracks (4, 5).

7. Food-processing device according to claim 6, **characterized in**
a) **that** the conveyed-products carriers (12, 13) are each moved forward by a predetermined offset (Δx1, Δx2) in a conveying direction (x) after a slice (6) has been deposited, so that the slices (6) on the conveyed-products carrier (12, 13) each form a shingled portion, and
b) **that** the offset (Δx1, Δx2) is individually adjustable for the individual conveyed-products carriers (12, 13), so that the shingled portions on the individual conveyed-products carriers have an individually adjustable degree of overlap of the slices (6).

8. Food-processing device according to any one of the preceding claims, **characterized in that** the measuring device comprises:
a) a distance sensor,
b) a camera (20).

9. Food-processing device according to claim 8, **characterized in**
a) **that** the food-processing device comprises a conveyor belt conveying the food products (2, 3), in particular parallel to the conveying surface (14) of the contactless drive system (AS), and
b) **that** the contactless drive system (AS) moves the conveyed products (12, 13) to the conveyor belt in order to transfer the food products (2, 3) from the conveyed products (12, 13) to the conveyor belt.

10. Operating method for a food-processing device, comprising the following steps:
a) cutting a food product (2, 3) into slices (6) by means of a cutting device (1), and
b) depositing the cut slices (6) on the conveyor (AS, 12-18),
c) wherein the conveyor (AS, 12-18) is a discontinuous conveyor, which conveys the deposited slices (6) discontinuously in contrast to a conveyor belt,
**characterized by** the following step:
d) weighing the conveyed-products carrier (12, 13) with slices (6) deposited thereon.

11. Operating method according to claim 9, **characterized in that** the discontinuous conveyor comprises at least one conveyed-products carrier (12, 13) which is freely movable in two dimensions within a substantially horizontal or substantially vertical conveying surface (14) and receives the cut-off slices (6).

12. Operating method according to claim 11, **characterized in,**
a) **that** the conveyed-products carrier (12, 13) can be raised and lowered in the vertical direction,
b) **that** the conveyed-products carrier (12, 13) is lowered in each case after a slice (6) has been cut off, in particular by one slice thickness in each case, so that the height of fall of the slices (6) from the cutting device (1) onto the top of a portion comprising several slices remains constant irrespective of the height of the portion.

13. Operating method according to any one of claims 10 to 12, **characterized in**
a) **that** the cutting device (1) comprises a cutting plane (8) in which the food products (2, 3) are cut into the slices (6),
b) **that** the food-processing device has a feeding device (9, 10) for conveying the food products (2, 3) into the cutting plane (8) for cutting,
c) **that** the feeding device (9, 10) has a plurality of parallel feed tracks (4, 5) for feeding a plurality of food products (2, 3) next to one another into the cutting plane (8), and
d) **that** the slices (6) from the food products (2, 3) cut open next to one another fall onto a respective conveyed-products carrier (12, 13), so that a respective conveyed-products carrier (12, 13) is provided for each of the conveying tracks (4, 5).

14. Operating method according to claim 13, **characterized in,**
a) **that** the conveyed-products carriers (12, 13) are each moved by a predetermined offset after a slice (6) has been deposited, so that the slices (6) on the conveyed-products carrier (12, 13) each form a shingled portion, and
b) **that** the offset is determined individually for the individual conveyed-products carriers (12, 13), so that the shingled portions on the individual conveyed-products carriers have an individually adjustable degree of overlap of the slices (6).

15. Operating method according to any one of claims 10 to 14, **characterized in**
a) **that** the slices (6) are deposited in a certain portion shape on the conveyed-products carrier (12, 13), and
b) **that** the conveyed-products carrier (12, 13) is moved to produce the desired portion shape during the deposition of the slices (6) on the conveyed-products carrier (12, 13), in particular with a rotation about a vertical axis of rotation and/or a displacement in a horizontal direction.

## Revendications

1. Système de transformation d'aliments pour découper des produits alimentaires (2, 3) en tranches (6), avec
a) un système de découpe (1) pour couper les tranches (6) des produits alimentaires (2, 3), et
b) un convoyeur (AS, 12-18) pour recevoir les tranches (6) découpées après une opération de découpe, dans lequel
b1) le convoyeur (AS, 12-18) est un convoyeur discontinu qui transporte les tranches (6) déposées de manière discontinue contrairement à une bande de convoyage,
b2) le convoyeur discontinu (AS, 12-18) présente au moins un support d'articles à convoyer (12, 13) qui peut se déplacer librement dans une surface de convoyage (14) dans deux dimensions (x, y) sans liaison à un trajet de convoyage fixe (27) et reçoit les tranches (6) découpées, et
b3) le convoyeur discontinu (AS, 12-18) présente un système d'entraînement sans contact (AS) qui déplace le support d'articles à convoyer (12, 13) à l'intérieur de la surface de convoyage (14) le long d'un trajet de convoyage (27) librement programmable, et ce, sans contact entre le support d'articles à convoyer (12, 13) d'une part et la surface de convoyage (14) d'autre part,
**caractérisé en ce**
c) que le système de transformation d'aliments présente une balance pour mesurer le poids du support d'articles à convoyer avec les tranches (6) posées dessus,
d) que la balance est intégrée dans le système d'entraînement sans contact (AS),
e) que le système d'entraînement sans contact (AS) maintient le support d'articles à convoyer (12, 13) en lévitation avec une puissance d'entraînement donnée,
f) qu'en fonction du poids du support d'articles à convoyer avec les tranches (6) posées dessus et de la puissance d'entraînement du système d'entraînement (AS), une distance est réglée entre le support d'articles à convoyer (12, 13) et la surface de convoyage (14),
g) que le système de transformation d'aliments présente un dispositif de mesure (20) qui mesure la distance entre le support d'articles à convoyer (12, 13) et la surface de convoyage (14),
h) qu'un système de commande est prévu qui
h1) maintient constante la distance entre le support d'articles à convoyer (12, 13) et la surface de convoyage (14) en ajustant la puissance d'entraînement et fournit la puissance d'entraînement nécessaire à cet effet comme mesure du poids, ou
h2) maintient la puissance d'entraînement constante et indique la distance en fonction du poids entre le support d'articles à convoyer (12, 13) et la surface de convoyage (14) comme mesure du poids.

2. Système de transformation d'aliments selon la revendication 1, **caractérisé en ce**
a) **que** le système d'entraînement sans contact (AS) présente plusieurs modules (15-18) qui sont de préférence adjacents les uns aux autres sans espace et forment la surface de convoyage continue (14), dans lequel le trajet de convoyage (27) à l'intérieur de la surface de convoyage (14) est librement programmable,
b) **que** les modules individuels (15-18) sont en option rectangulaires pour pouvoir composer la surface de convoyage (14) sans interstice à partir des modules (15-18).

3. Système de transformation d'aliments selon l'une quelconque des revendications précédentes, **caractérisé en ce**
a) **que** le système de transformation d'aliments présente un système de levage pour lever ou abaisser le support d'articles à convoyer (12, 13), et
b) **que** le système de levage permet de préférence une course verticale du support d'articles à convoyer d'au moins 2 mm, 3 mm, 4 mm, 5 mm, 10 mm, 20 mm, 40 mm ou 80 mm.

4. Système de transformation d'aliments selon la revendication 3, **caractérisé en ce**
a) **que** la surface de convoyage (14) est sensiblement horizontale et le système de levage soulève ou abaisse le support d'articles à convoyer (12, 13) au moyen du système d'entraînement sans contact (AS) par rapport au module de la surface de convoyage (14) situé en dessous, sensiblement à angle droit par rapport à la surface de convoyage (14), ou
b) **que** la surface de convoyage (14) s'étend sensiblement horizontalement et le système de levage soulève ou abaisse le support d'articles à convoyer (12, 13) indépendamment du système d'entraînement sans contact (AS) par rapport au module situé en dessous de la surface de convoyage (14) dans la direction verticale, ou
c) **que** la surface de convoyage (14) s'étend sensiblement horizontalement et le système de levage soulève ou abaisse le support d'articles à convoyer (12, 13) conjointement avec le module du système d'entraînement (AS) situé en dessous.

5. Système de transformation d'aliments selon la revendication 3 ou 4, **caractérisé en ce**
a) **que** le système de transformation d'aliments présente un système de commande (21) qui pilote le système de levage et détermine la position en hauteur (h) du support d'articles à convoyer, et
b) **que** le système de commande (21) pilote le système de levage lors d'une opération de découpe de telle sorte que le support d'articles à convoyer (12, 13) est abaissé respectivement après la découpe d'une tranche (6), en particulier d'une épaisseur de tranche respectivement, de telle sorte que la hauteur de chute des tranches (6) du dispositif de coupe (1) sur le côté supérieur d'une portion comprenant plusieurs tranches reste constante indépendamment de la hauteur de la portion.

6. Système de transformation d'aliments selon l'une quelconque des revendications précédentes, **caractérisé en ce**
a) **que** le système de découpe (1) présente un plan de découpe (8) dans lequel les produits alimentaires (2, 3) sont découpés en les tranches (6),
b) **que** le système de transformation d'aliments présente un système d'avance (9, 10) pour convoyer les articles alimentaires (2, 3) à découper dans le plan de découpe (8),
c) **que** le système d'avance (9, 10) présente plusieurs voies de convoyage parallèles (4, 5) pour convoyer côte à côte plusieurs produits alimentaires (2, 3) dans le plan de découpe (8), et
d) **que** les tranches (6) des produits alimentaires (2, 3) découpés côte à côte tombent sur respectivement au moins un support d'articles à convoyer (12, 13), de telle sorte que respectivement moins un support d'articles à convoyer (12, 13) est prévu pour chacune des voies de convoyage (4, 5).

7. Système de transformation d'aliments selon la revendication 6, **caractérisé en ce**
a) **que** les supports d'articles à convoyer (12, 13) sont respectivement déplacés vers l'avant d'un décalage prédéfini (Δx1, Δx2) dans une direction de convoyage (x) après le logement d'une tranche (6), de telle sorte que les tranches (6) forment sur le support d'articles à convoyer (12, 13) respectivement une portion alignée, et
b) **que** le décalage (Δx1, Δx2) est réglable individuellement pour les divers supports d'articles à convoyer (12, 13), de telle sorte que les portions alignées sur les divers supports d'articles à convoyer présentent un degré de chevauchement des tranches (6) réglable individuellement.

8. Système de transformation d'aliments selon l'une quelconque des revendications précédentes, **caractérisé en ce que** le dispositif de mesure présente :
a) un capteur de distance,
b) une caméra (20).

9. Système de transformation d'aliments selon la revendication 8, **caractérisé en ce**
a) **que** le système de transformation d'aliments présente une bande de convoyage qui transporte les produits alimentaires (2, 3), en particulier parallèlement à la surface de convoyage (14) du système d'entraînement sans contact (AS), et
b) **que** le système d'entraînement sans contact (AS) déplace les supports d'articles à convoyer (12, 13) vers la bande de convoyage pour transférer les produits alimentaires (2, 3) du support d'articles à convoyer (12, 13) à la bande de convoyage.

10. Procédé de fonctionnement d'un système de transformation d'aliments selon l'une quelconque des revendications précédentes, avec les étapes suivantes :
a) de découpe d'un produit alimentaire (2, 3) en tranches (6) au moyen du système de découpe (1), et
b) de dépose des tranches (6) découpées sur le convoyeur (AS, 12-18),
c) dans lequel le convoyeur (AS, 12-18) est un convoyeur discontinu qui transporte les tranches (6) déposées de manière discontinue, contrairement à une bande de convoyage.
**caractérisé par** l'étape suivante :
d) de pesage du support d'articles à convoyer avec les tranches (6) posées dessus.

11. Procédé de fonctionnement selon la revendication 9, **caractérisé en ce que** le convoyeur discontinu présente au moins un support d'articles à convoyer (12, 13) qui peut se déplacer librement dans deux dimensions à l'intérieur d'une surface de convoyage (14) sensiblement horizontale et qui reçoit les tranches (6) découpées.

12. Procédé de fonctionnement selon la revendication 11, **caractérisé en ce**
a) **que** le support d'articles à convoyer (12, 13) peut être soulevé et abaissé dans la direction verticale,
b) **que** le support d'articles à convoyer (12, 13) est abaissé respectivement après la découpe d'une tranche (6), en particulier d'une épaisseur de tranche respectivement, de telle sorte que la hauteur de chute des tranches (6) du système de découpe (1) sur le côté supérieur d'une portion comprenant plusieurs tranches reste constante indépendamment de la hauteur de la portion.

13. Procédé de fonctionnement selon l'une quelconque des revendications 10 à 12, **caractérisé en ce**
a) **que** le système de découpe (1) présente un plan de découpe (8) dans lequel les produits alimentaires (2, 3) sont découpés en les tranches (6),
b) **que** le système de transformation d'aliments présente un système d'avance (9, 10) pour convoyer les articles alimentaires (2, 3) à découper dans le plan de découpe (8),
c) **que** le système d'avance (9, 10) présente plusieurs voies de convoyage parallèles (4, 5) pour convoyer côte à côte plusieurs produits alimentaires (2, 3) dans le plan de découpe (8), et
d) **que** les tranches (6) des produits alimentaires (2, 3) coupés les uns à côté des autres tombent sur respectivement un support d'articles à convoyer (12, 13), de telle sorte qu'un support d'articles à convoyer (12, 13) est prévu pour chacune des voies de convoyage (4, 5).

14. Procédé de fonctionnement selon la revendication 13, **caractérisé en ce**
a) **que** les supports d'articles à convoyer (12, 13) sont déplacés d'un décalage prédéfini après la réception d'une tranche (6), de telle sorte que les tranches (6) forment respectivement une portion alignée sur le support d'articles à convoyer (12, 13), et
b) **que** le décalage est déterminé individuellement pour les divers supports d'articles à convoyer (12, 13) de telle sorte que les portions alignées sur les divers supports d'articles à convoyer présentent un degré de chevauchement des tranches (6) réglable individuellement.

15. Procédé de fonctionnement selon l'une quelconque des revendications 10 à 14, **caractérisé en ce**
a) **que** les tranches (6) sont posées dans une forme de portion donnée sur le support d'articles à convoyer (12, 13), et
b) **que** le support d'articles à convoyer (12, 13) est déplacé pour créer la forme de portion souhaitée lors du dépôt des tranches (6) sur le support d'articles à convoyer (12, 13), en particulier avec une rotation autour d'un axe de rotation vertical et/ou un coulissement dans la direction horizontale.
